# EUROPEAN PATENT APPLICATION

(11) **EP 1 986 064 A2**
(43) Date of publication of application: **29.10.2008**
(21) Application number: 08154964.4
(22) Date of filing: 22.04.2008
(51) Int. Cl.: G05B 19/416

(54) **Numerical controller with function of decelerating reference variable in path table operation**

(30) Priority: 24.04.2007 JP 2007114417
(71) Applicant: Fanuc Ltd, Yamanashi 401-0597 (JP)
(72) Inventor: Endo, Takahiko c/o FANUC LTD, Minamitsuru-gun Yamanashi 401-0597 (JP); Takeuchi, Yasushi c/o FANUC LTD, Minamitsuru-gun Yamanashi 401-0597 (JP)
(74) Representative: Ward, James Norman

(57) **Abstract**

A numerical controller capable of avoiding a shock to a machine by a controlled axis when a command of an alarm, a reset or a feed hold is issued in a path table operation. The numerical controller performs the path table operation where position of a controlled axis of a machine is controlled in synchronism with an input value of a reference variable indicative of time, a position of an axis or a position of a spindle according to a data table that stores command positions of the controlled axis respective for set values of the reference variable. The numerical controller comprises deceleration/stop command receiving means that receives a command to decelerate and stop the controlled axis in the path table operation; and decelerating means that gradually reduces a rate of increase of the reference variable to zero so that the controlled axis is decelerated and stopped in response to the deceleration/stop command.

## Description

### BACKGROUND OF THE INVENTION

### 1. Field of the Invention

The present invention relates to a numerical controller for controlling an industrial machine such as a machine tool and a manufacturing machine, and particularly to a path table operation which is so called as an electric cam control in which axes of the machine are controlled in synchronism by the numerical controller.

### 2. Description of Related Art

There is known a numerical controller in which command positions of controlled axes with respect to a reference variable such as time, a position of an axis or a position of a spindle are stored in a path table operation data table, and the command positions of the controlled axes are successively read from the data table to control the controlled axes based on the commanded positions of the controlled axes (see JP 59-177604A and JP 2003-303005A). With such path table operation, a tool can be moved without restriction to shorten machining time and realize high precision of the machining. A motion path is created to connect the command positions by a straight line, a second-order function, a third-order function, etc.

When an abnormality occurs in the conventional path table operation, there have been adopted a method in which power supplies to servomotors and a spindle motor are shut off to emergency stop rotation of the spindle and the controlled axes, and a method in which pulse distribution to the controlled axes are stopped to immediately stop the controlled axes independently of the rotation of the spindle.

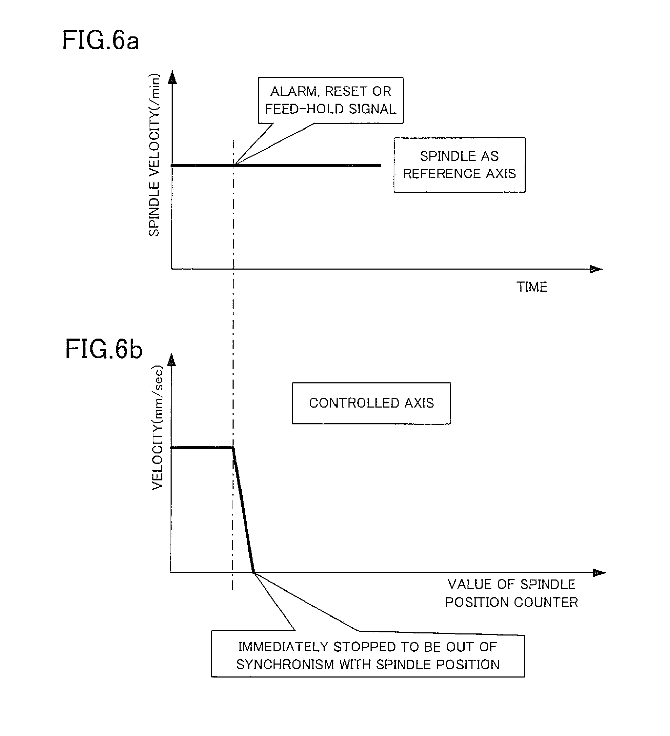

In the method of stopping the pulse distribution to the servomotors to immediately stop the controlled axes independently of rotation of the spindle, as shown in FIGS. 6a and 6b, the spindle, the position of which is used as the reference variable, is not stopped when an alarm signal to discontinue an operation of the machine, a reset signal to reset a counted value of the spindle position and a feed-hold signal to suspend an operation of the machine is issued in such a case where arithmetic operation is not normally performed at junctions of the functions for connecting the command positions, the controlled axes are not controlled to a position set for the position of the spindle, so that velocities of the controlled axes are changed sharply to be immediately stopped to impart an impact to the machine.

### SUMMARY OF THE INVENTION

A numerical controller of the present invention performs a path table operation in which position of a controlled axis of a machine is controlled in synchronism with an input value of a reference variable indicative of time, a position of an axis or a position of a spindle according to a data table that stores command positions of the controlled axis respective for set values of the reference variable. The numerical controller comprises: deceleration/stop command receiving means that receives a command to decelerate and stop the controlled axis in the path table operation; and decelerating means that gradually reduces a rate of increase of the reference variable to zero so that the controlled axis is decelerated and stopped when the deceleration/stop command is received by the deceleration/stop command receiving means.

The reference variable may be represented by a counted value of pulses from a pulse generator, a clock, an encoder provided at the axis or an encoder provided at the spindle.

The decelerate means may reduce the rate of increase of the reference variable according to a preset time constant.

The deceleration/stop command may comprise an alarm signal to discontinue an operation of the machine, a reset signal to reset the input value of the reference variable or a feed-hold signal to suspend an operation of the machine.

The decelerating means may multiply the rate of increase of the reference variable by a scale factor that gradually decreases according to a preset time constant.

With the above arrangements, the controlled axis can be gradually decelerated and stopped without sudden change of velocity thereof to maintain the state of the path table operation when an alarm signal, a reset signal or a feed-hold signal is issued, so that shock to the machine controlled by the numerical controller is prevented.

### BRIEF DESCRIPTION OF THE DRAWINGS

FIG. 1 is a block diagram of principal parts of a numerical controller according to the present invention;
FIG. 2a is a functional diagram of a path table operation, and FIG. 2b is a functional block diagram of another path table operation with override means;
FIG. 3 is a flowchart of processing of reducing an increase rate of a reference variable when an alarm, reset or feed-hold signal is issued in the path table operation according to an embodiment of the present invention;
FIG. 4 is a flowchart of processing for reducing the increase rate of a reference variable using a scale factor of the override according to another embodiment of the present invention;
FIGS. 5a and 5b are graphs showing variation of velocities of a spindle and a controlled axis in which the velocity of the spindle is gradually reduced according to a preset time constant; and
FIGS. 6a and 6b are graphs showing variation of velocities of a spindle and a controlled axis according to the prior art.

### DETAILED DESCRIPTION

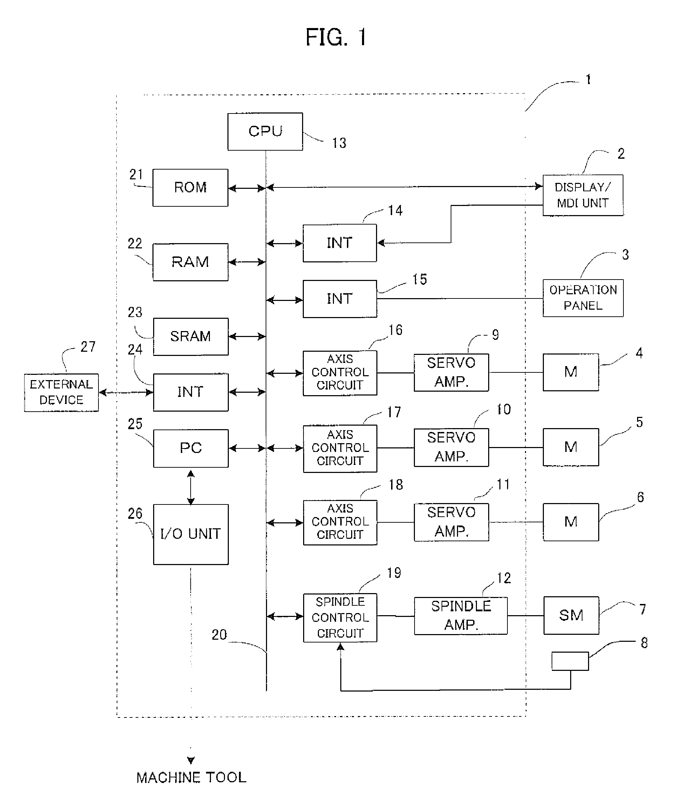

FIG. 1 shows principal parts of an numerical controller for performing a path table operation according to the present invention. A system program and various programs for performing processing of creating and editing machining programs and for executing an automatic operation of a machine are stored in a ROM 21. A CPU 13 reads the system program stored in the ROM 21 through a bus 20 and generally controls the numerical controller 1 according to the read system program. A RAM 22 stores temporary calculation data, display data and input data inputted by an operator through a display/MDI unit 2. A data tables Tx, Ty and Tz for path table operation are stored in a SRAM 23. Machining programs, etc. read through an interface 24 or inputted through the display/MDI unit 2 are stored in the SRAM 23.

The interface 24 interconnects the numerical controller 1 and external devices 27 such as external storage devices. A machining program edited in the numerical controller 1 may be stored in an external storage medium through the external device 27. A PC (programmable controller) 25 outputs signals to auxiliary devices of a machine tool through an I/O unit 26 to control the auxiliary devices. The PC 25 also receives signals from various switches on an operation panel provided on the machine tool and transfers the signals to the CPU 13 after performing necessary processing on the signals. The display/MDI unit 2 is a manual data input device with a display, a keyboard, etc., and an interface 14 receives commands and data from the keyboard of the display/MDI unit 2 and transfers the same to the CPU 13. An interface 15 is connected to an operation panel 3 to receive various commands from the operation panel 3. Axes controllers 16, 17 and 18 for respective axes receive motion commands of the respective axes from the CPU 13 and output commands for the respective axes to servo amplifiers 9, 10 and 11. Upon receipt of the commands, the servo amplifiers 9, 10 and 11 drive the servomotors 4, 5 and 6 for the respective axes. The servomotors 4, 5 and 6 have position/velocity detectors provided therein, and position/velocity feedback signals from the position/velocity detectors are fed back to the axes control circuits 16, 17 and 18 to perform feedback control of positions/velocities of the respective axes. In FIG. 1, the feedback of the positions/velocities are omitted.

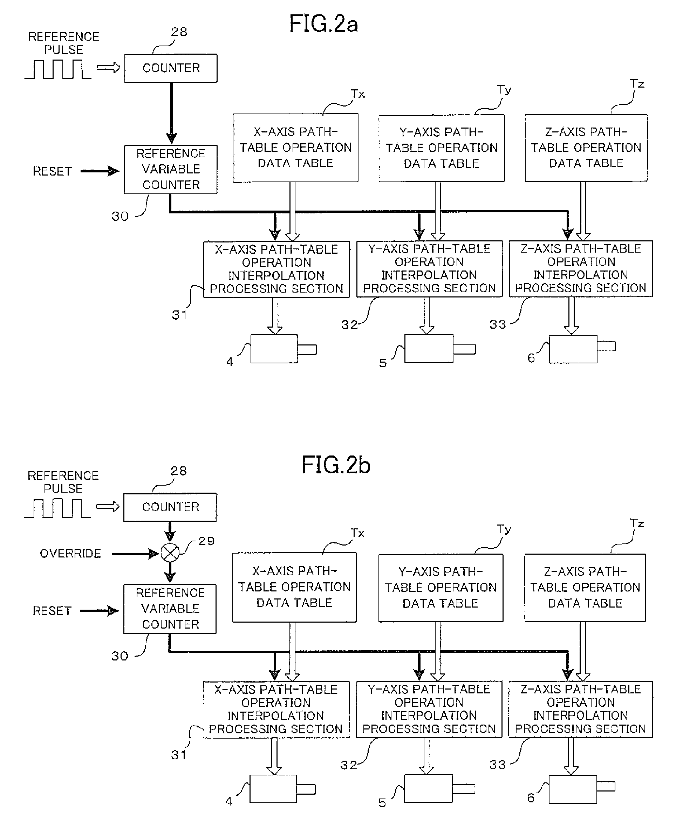

The spindle control circuit 19 receives a spindle rotation command and outputs a spindle velocity command to a spindle amplifier 12. Upon receipt of the spindle velocity command, the spindle amplifier 12 rotates a spindle motor 7 at the commanded velocity. A position encoder 8 feeds back pulses (reference pulses) and one-rotation signals in synchronism with rotation of the spindle motor 7 to the spindle control circuit 19 to perform the velocity control of the spindle. The feedback pulses and the one-rotation signals are read by the CPU 13 through the spindle control circuit 19 and the number of feedback pulses is counted and stored in a counter provided in the RAM 22 (which corresponds to the counter 28 in FIG. 2a). Pulses indicative of the spindle velocity command to the spindle may be used as the reference pulses.

The foregoing embodiment is an example where the feedback pulses from the position encoder provided at the spindle are uses as the reference pulses with the spindle being the reference axis and three controlled axes are provided in the machine tool controlled by the numerical controller. In the embodiment, path table operation data tables for the three controlled axes are prepared and stored in the SRAM 23. The number of controlled axes may be two, four or more than four. In that case, path table operation data tables are prepared and stored in the SRAM 23 to have the number corresponding to the number of controlled axes and also the number of axes control circuits, servo amplifiers and servomotors provided therefor. An external axis may be used as the reference axis and pulses generated by an pulse encoder provided at the external axis may be used as the reference pulses. Further, pulses from an external pulse generator or pulses from a clock provided in the CPU 13 may be used as the reference pulses.

FIG. 2a schematically shows functions of the path table operation. In FIG. 2a, reference pulses indicative of motion of a reference axis, such as pulses from the position encoder provided at the spindle or the external axis, pulses from the external pulse generator or the clock are inputted into and counted by the counter 28, and the counted value is stored in a reference variable counter 30 at every predetermined period (ITP period). The value of the reference variable counter 30 is inputted into the path table operation interpolation processing sections 31-33 for the controlled axes X, Y and Z, and the processing sections 31-33 respectively obtain position commands for the controlled axes referring to the path table operation data tables Tx, Ty and Tz, and output respective differences between the commanded positions and the positions at the previous processing period as motion commands to the servomotors 4-6 for the controlled axes.

The reference position counter 30 is reset in response to a reset signal when a path table operation is commanded or when a one-rotation signal is issued from the position coder for the reference axis for the first time after a path table operation is commanded. Further, the reset signal is issued in such a case where arithmetic operation is not normally performed at junctions of the functions for connecting the command positions.

FIG. 2b schematically shows functions of the path table operation with override means added. In FIG. 2b, the reference pulses indicative of motion of the reference axis are inputted into the counter 28 and counted at every predetermined period (ITP). A multiplier 29 multiplies the number of pulses counted by the counter 28 by a scale factor set by override means, and result of the multiplication is stored in a reference variable counter 30. The override means man set the scale factor to a desired value, as described in JP 2003-303005A.

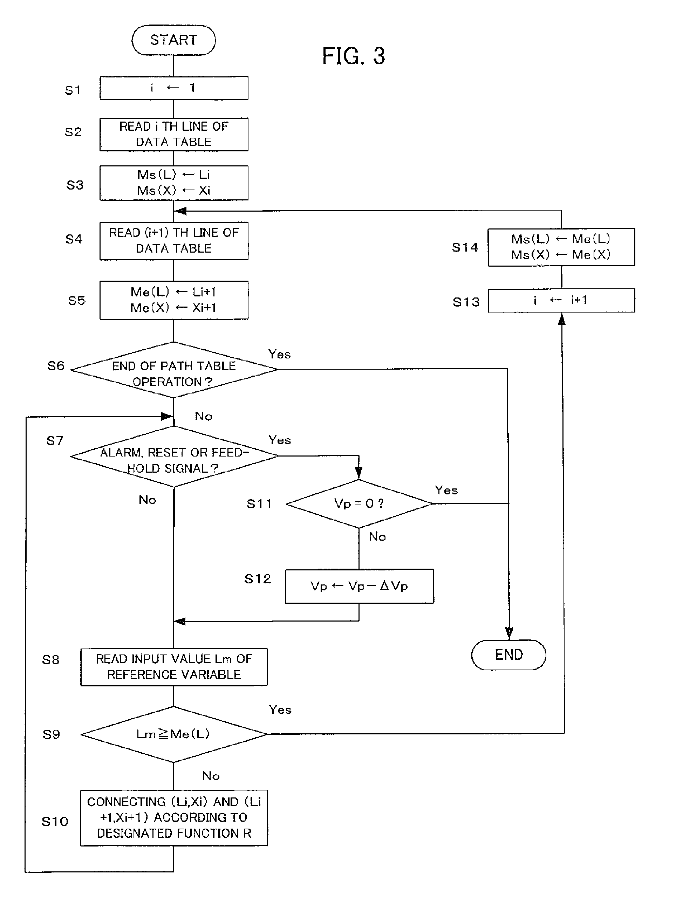

FIG. 3 shows an algorithm to be performed by the CPU 13 of the numerical controller 1 in the path table operation according to the embodiment of the present invention.

When a path table operation command is inputted, the CPU 13 sets an index i indicative of a position of reading the data in the path table operation data table to "1" (Step S1), and reads command data on i th line in the data table stored in the SRAM 23 (Step S2). The read set value Li of the reference variable is stored in a register Ms(L) for storing the set value of the reference variable at a start position of a motion path, and a command position Xi of the controlled axis (X-axis) is stored in a register Ms(X) for storing a start position of the motion path (Step S3).

Then, command data on (i+1) th line of the path table are read (Step S4). The read set value Li+1 of the reference variable is stored in a register Me(L) for storing the set value of the reference variable at the end point of the motion path, and a command position Xi+1 of the controlled axis (X-axis) is stored in a register Me(X) for storing an end position of the motion path (Step S5).

Then, it is determined whether or not the read data indicate an end command of the path table operation (Step S6), and if not, it is determined whether or not an alarm signal, a reset signal or a feed-hold signal is inputted (Step S7). If it is determined that an alarm signal, a reset signal or a feed-hold signal is not inputted, the input value Lm of the reference variable is read (Step S8), and the read input value Lm of the reference variable is equal or greater than the set value of the reference variable at the end point of the motion path stored in the register Me(L) (Step S9). If the input value Lm of the reference variable does not reach the command value of the reference variable at the end position of the motion path, processing of distributing motion commands for trajectory control to connect the start position of the motion path stored in the registers Ms(L) and Ms(X) and the end position of the motion path stored in the registers Me(L) and Me(X) according to a function R which is designated by the command data on (i+1) th line of the path table, and a motion amount for the controlled axis (X-axis) at every distribution processing is outputted to the axis control circuit 16 for the controlled axis (X-axis) (Step S10). Then, the procedure returns to Step S7 to perform the processing from Step S7 to Step S10 at every distribution processing period.

When it is determined at Step S9 that the input value Lm of the reference variable is equal to or greater than the set value of the reference variable at the end point of the motion path stored in the register Me(L), the index is incrementally increased by "1" (Step S13) and the set value of the reference variable stored in the register Me(L) is stored in the register Ms(L), and the commend position of the controlled axis stored in the register Me(X) is stored in the register Ms(X), and data of the next start position are stored in the register Ms(L) and the register Ms(X) (Step S14). Then, the procedure returns to Step S4 where the command data on (i+1) th line of the data table are read, and the read set value Li+1 of the reference variable is stored in the register Me(L) and the command position Xi+1 of the controlled axis (X-axis) is stored in the register Me(X), so that the position data of the end point of the next motion path are stored (Step S5). When a path table operation end command is read at Step S6 in performing the above processing, the procedure of the path table operation is terminated.

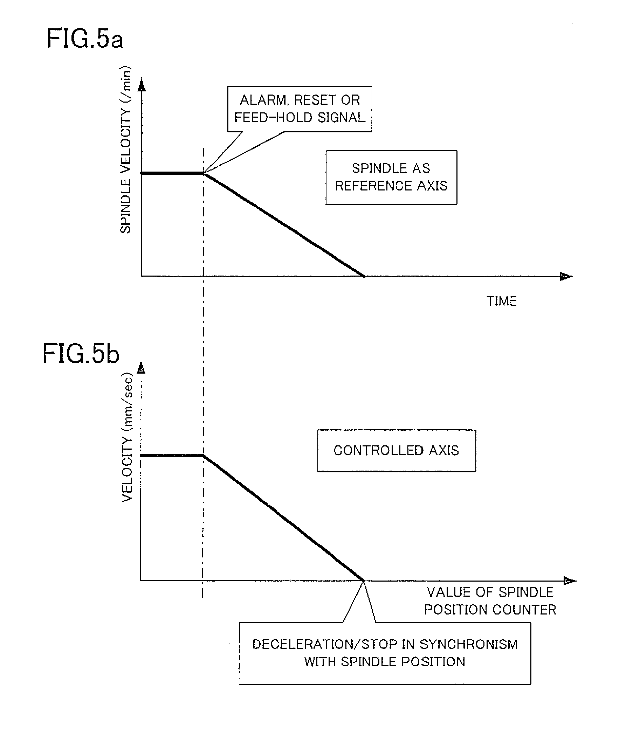

When it is determined that an alarm signal, a reset signal or a feed-hold signal is inputted in Step S7, it is determined whether or not a rate of increase Vp of the reference variable is zero (Step S11). If the increase rate Vp of the reference variable is not zero, the increase rate Vp is reduced by a predetermined amount ΔVp (Step S12). The amount ΔVp is used to gradually decrease the increase rate Vp according to a preset time constant at every distribution period. After the increase rate Vp is reduced by the amount ΔVp, the procedure returns to Step S8 where the input value Lm of the reference variable, the increase rate Vp of which is reduced, is read. Then, the procedure returns to Step S7 through Steps S9-S10. The processing of Steps S7, S 11-S12 and S8-S10 is repeatedly executed at every distribution period to gradually decelerate the controlled axes (FIGS. 5a and 5b). When it is determined that the increase rate of the reference variable is reduced to zero (e.g. the spindle and the controlled axis are stopped), the procedure of the path table operation is terminated. In this embodiment, since the number of reference pulses counted and stored in the counter 28 at every predetermined period represents the increase rate of the reference variable, the value counted by the counter 28 at every predetermined period corresponds to Vp.

As another embodiment, it is possible to realize deceleration/stop of the controlled axis by gradually reducing the scale factor of the override in the arrangement shown in FIG. 2b according to a preset time constant. In this embodiment, the value counted by the counter 28 at every predetermined period, which corresponds to Vp, is multiplied by the scale factor which decreases according to a preset time constant at the multiplier 29.

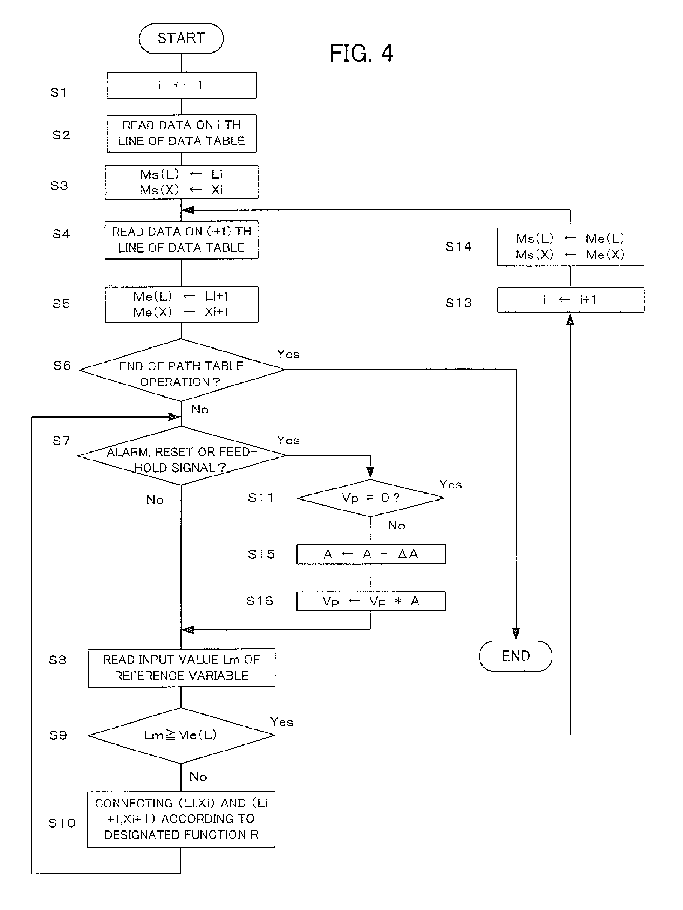

FIG. 4 shows processing of reducing the increase rate of the reference variable using the scale factor of the override. An amount ΔA is subtracted from the scale factor A of the override having a predetermined initial value so that the scale factor A is reduced according to a preset time constant (Step S15), the counted value by the counter 28 is multiplied by the reduced scale factor A of the override (Step S16), and the procedure returns to Step S8. The amount ΔA is predetermined so that the scale factor A is reduced according to the preset time constant at every distribution period. The processing of Steps S7, S 11, S15-S16 and S8-S10 is repeatedly executed at every distribution period to decelerate the controlled axes. When product of the counted value by the counter 28 and the scale factor A is reduced to zero, the procedure of the path table operation is terminated. In this embodiment, the controlled axis can be gradually decelerated irrespective of the reference variable with the path table operation maintained.

In addition, the controlled axis may be set as the spindle and the position of the spindle may be controlled in synchronism with an input value of a reference variable indicative of time or a position of an axis according to a data table that stores command positions of the spindle respective for set values of the reference variable.

## Claims

1. A numerical controller for performing a path table operation in which position of a controlled axis of a machine is controlled in synchronism with an input value of a reference variable indicative of time, a position of an axis or a position of a spindle according to a data table that stores command positions of the controlled axis respective for set values of the reference variable, said numerical controller comprising:
deceleration/stop command receiving means that receives a command to decelerate and stop the controlled axis in the path table operation; and
decelerating means that gradually reduces a rate of increase of the reference variable to zero so that the controlled axis is decelerated and stopped when the deceleration/stop command is received by said deceleration/stop command receiving means.

2. A numerical controller according to claim 1, wherein the reference variable is represented by a counted value of pulses from a pulse generator, a clock, an encoder provided at the axis or an encoder provided at the spindle.

3. A numerical controller according to claim 1, wherein said decelerate means reduce the rate of increase of the reference variable according to a preset time constant.

4. A numerical controller according to claim 1, wherein the deceleration/stop command comprises an alarm signal to discontinue an operation of the machine, a reset signal to reset the input value of the reference variable or a feed-hold signal to suspend an operation of the machine.

5. A numerical controller according to claim 1, wherein said decelerating means multiplies the increase rate of the reference variable by a scale factor that gradually decreases according to a preset time constant.
